# EUROPEAN PATENT SPECIFICATION

(11) **EP 3 337 715 B1**
(45) Date of publication and mention of the grant of the patent: **08.01.2020**
(21) Application number: 16751428.0
(22) Date of filing: 02.08.2016
(51) Int. Cl.: B62D 55/21

(54) **LUBRICATED CARTRIDGE FOR HYDRAULIC MINING SHOVEL TRACK**
GESCHMIERTE KARTUSCHE FÜR RAUPENKETTE EINER HYDRAULISCHEN BERGBAUSCHAUFEL
CARTOUCHE LUBRIFIÉE POUR CHENILLE DE PELLETEUSE DE MINE HYDRAULIQUE

(30) Priority: 19.08.2015 US 201514830275
(43) Date of publication of application: 27.06.2018
(73) Proprietor: Caterpillar Inc., Deerfield, Illinois 60015 (US)
(72) Inventor: OERTLEY, Thomas E., Peoria, IL 61615 (US); KOWALSKI, Thomas J., Franklin, WI 53132 (US)
(74) Representative: BRP Renaud & Partner mbB Rechtsanwälte Patentanwälte Steuerberater
(86) International application number: PCT/US2016/045118
(87) International publication number: WO 2017/030780

(56) References cited:
- EP-A2- 2 289 775
- US-A1- 2006 284 485
- US-A1- 2013 002 010
- US-A1- 2015 061 368

## Description

### Technical Field

This disclosure relates generally to a track chain for a mining machine and, more particularly, to a cartridge assembly for a track chain for a mining machine.

### Background

Track-type vehicles such as crawlers, excavators, and the like, use track assemblies to provide ground-engaging propulsion. Track-type vehicles generally have an undercarriage with at least one track on each side of the vehicle. Each track typically includes an endless track chain that engages the ground and propels the vehicle. Each endless track chain is made up from a plurality of interconnected track links. Adjacent track links in a chain are connected at a respective track joint. In one exemplary application, track joints for mining vehicles include an un-lubricated pin, which either resides in the track joint directly or within bushings to provide the pivotal connection between adjacent track links. By the weight of the machine acting on the pivoting joints between track links, and also by ingress of debris between the pin and its bushing, known track links are prone to wear, which increases the friction and, thus, the wear between the links in a track chain, which can ultimately reduce durability of the track chain.

One example of a known track link joint can be found in U.S. Patent No. 6,382,742 (the '742 Patent) to Hasselbusch et al., which describes a lubricated pin and bushing. In the '742 patent, the system described includes a cartridge that is inserted into supporting bores of a track joint by a press-fit operation. For a large vehicle, such as a mining vehicle, a large hydraulic press is required to perform the press fitting procedure both when installing a cartridge into a joint as well as when removing a cartridge during service. The force required to remove the cartridge may also be exacerbated by corrosion and fretting that may appear around and within the track joint.

Another example of a known track link joint ca be found in US 2006/0284485 A1, which describes a cartridge bearing assembly for a track chain with load bearing insert members positioned about a pin and a rotatable bushing positioned there between.

### Summary

In one aspect, the disclosure describes a cartridge assembly for creating a pin joint between adjacent track shoes in a track chain, the pin joint extending through supporting bores formed in the track shoes, the cartridge assembly including a bushing having a first end face, a second end face, an outer surface, and an inner surface, the inner surface defining a bushing passage shaped as a cylindrical bore. The bushing forms a lubrication reservoir adjacent the inner surface of the bushing and extending towards the outer surface of the bushing and the lubrication reservoir is substantially aligned between the first end face and the second end face. The outer surface of the bushing corresponds with an outer diameter of the cartridge assembly. A track pin has a longitudinal axis, an outer surface, a first end, and a second end. The track pin is disposed within the cylindrical bore of the bushing such that both the first end and the second end of the track pin extend past the bushing. The bushing is rotatable with respect to the track pin, and the outer surface of the track pin is in fluid communication with the lubrication reservoir. A first sleeve is disposed about the track pin and adjacent to the first end face of the bushing, and a second sleeve is disposed about the track pin and adjacent to the second end face of the bushing. A first collar has an outer surface, a first end, and a second end. The first collar is disposed about the track pin and the first end of the first collar is disposed adjacent the first sleeve. A second collar has an outer surface, a first end, and a second end. The second collar is disposed about the track pin and the first end of the second collar is disposed adjacent the second sleeve. The outer diameter of the cartridge assembly is less than a diameter of supporting bores such that the cartridge assembly comprising the track pin, the bushing, the first sleeve, the second sleeve, the first collar and the second collar is rotatable with respect to inside surfaces of the supporting bores.

In another aspect, a method for installing a cartridge assembly for a track chain includes placing the cartridge assembly into a first joint, and securing the cartridge assembly in the first joint using hand tools. An outer diameter of the cartridge assembly is less than a diameter of supporting bores such that the cartridge assembly comprising the track pin, the bushing, the first sleeve, the second sleeve, the first collar and the second collar is rotatable with respect to inside surfaces of the supporting bores.

In yet another aspect, a track chain joint assembly includes a male lug forming a first bore, an inside female lug forming a second bore, and outside female lug forming a third bore. The male lug is interposed between the inside female lug and the outside female lug. A track shoe forms the inside female lug and the outside female lug and an adjacent track shoe forms the male lug. A cartridge assembly has an outer diameter and has a longitudinal axis, and the cartridge assembly is disposed within the first bore, the second bore, and the third bore. The cartridge assembly is configured to rotate with respect to the longitudinal axis within the first bore, the second bore, and the third bore. The outer diameter of the cartridge assembly is less than a diameter of any of the first bore, the second bore, and the third bore such that the cartridge assembly is rotatable with respect to the first bore, the second bore, and the third bore.

### Brief Description Of The Drawings

FIG. 1 is an outline view from the side of a machine with a track-type undercarriage in accordance with the disclosure.
FIG. 2 is a partial section view of a subassembly of a first track chain assembly in accordance with the disclosure.
FIG. 3 is a cross section of a track pin cartridge assembly in accordance with the disclosure.
FIG. 4 is an isometric view of a track pin cartridge assembly in accordance with the disclosure.
FIG. 5 is a flowchart for a method for installing a cartridge assembly into a track joint in accordance with the disclosure.

### Detailed Description

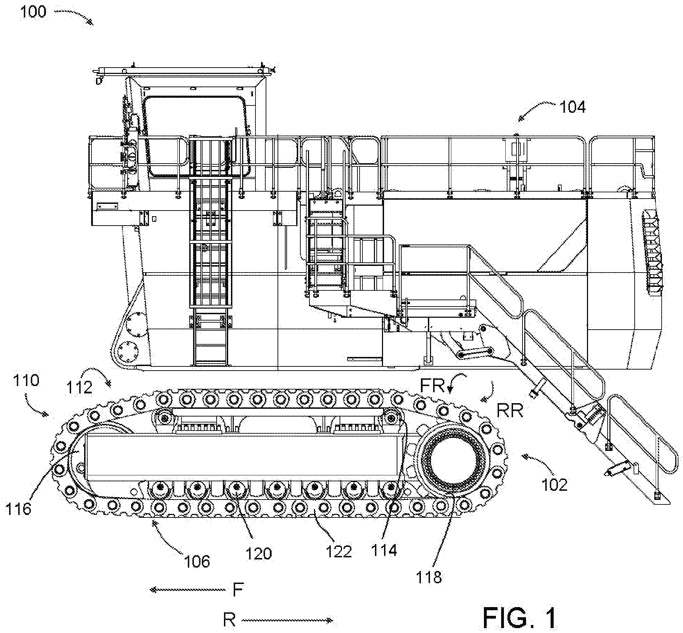

FIG. 1 shows an embodiment of a machine 100 with a track-type undercarriage 102. As shown, the machine 100 is a hydraulic mining shovel, but other machine types can be used. The machine 100 includes a frame 104 disposed above the undercarriage 102. The undercarriage 102 includes a first side 110 and a second side 112, a first track chain assembly 106 disposed on the first side 110, and a second track chain assembly (not shown) disposed on the second side 112. The first side 110 is in opposing relationship with the second side 112. Together, the track chain assemblies are configured to engage the ground, or other surface, to propel the machine 100. It should be appreciated that the track assemblies of the machine 100 may be similar and, further, may represent mirror images of one another. Therefore, only the first track chain assembly 106 will be described herein. It should be understood that the description of the first track chain assembly 106 is applicable to the second track chain assembly as well.

The first track chain assembly 106 is arranged about a plurality of rolling elements such as a drive sprocket 114, a front idler 116, a rear idler 118, and a plurality of track rollers 120. The first track chain assembly 106 includes a plurality of track shoes 122, the track shoes 122 configured to engage the ground, or other surface, and propel the machine 100. In operation, the drive sprocket 114 is driven in a forward rotational direction "FR" to drive the first track chain assembly 106, and thus the machine 100, in a forward direction "F", and in a reverse rotational direction "RR" to drive the first track chain assembly 106, and thus the machine 100, in a reverse direction "R." The drive sprocket 114 of the first track chain assembly 106 can be operated independently of a drive sprocket of the second track chain assembly to turn the machine 100.

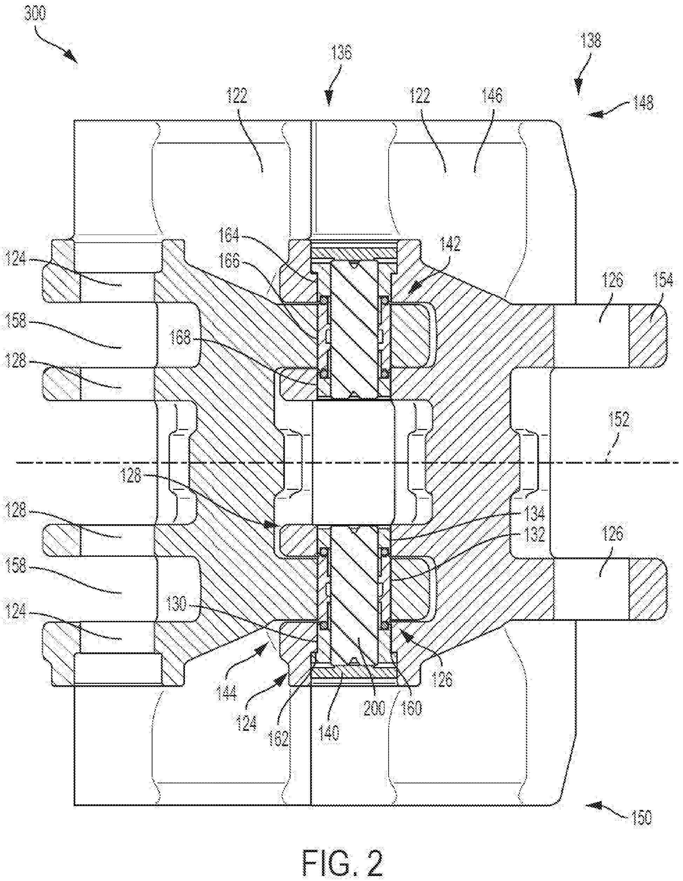

The first track chain assembly 106 includes a plurality of subassemblies 300. As shown in FIG. 2, each subassembly 300 includes two track pin cartridge assemblies 200 and two track shoes 122 forming a first joint 142 and a second joint 144. The first track chain assembly 106 has a predetermined length for a given application with opposite ends that are connected to form an endless chain. A number of subassemblies 300 are mechanically coupled to adjacent subassemblies 300 so that, when an appropriate number of these subassemblies 300 are connected together, the first track chain assembly 106 is formed. Each subassembly 300 is mechanically coupled to an adjacent subassembly 300 by the first joint 142 and the second joint 144 via a respective track pin cartridge assembly 200.

Each track shoe 122 includes a shoe body 146, an inner side 148, and outer side 150, a first side 136, and a second side 138. The inner side 148 faces the frame 104 of the machine 100, and the outer side 150 faces away from the frame 104 of the machine 100. An axis of symmetry 152 extends halfway between the inner and outer sides 148, 150 of the track shoe 122. The first and second sides 136, 138 correspond with sides that interface with adjacent track shoes 122.

In the illustrated embodiment, each track shoe 122 forms a pair of male lugs 126 on the second side 138 extending away from the shoe body 146. The male lugs 126 are placed at equal distances from the axis of symmetry 152 in a lateral direction with respect to the chain. Each male lug 126 forms a first bore 132 and a tip 154. A pair of male lugs 126 is formed of the same track shoe 122 such that their respective first bores 132 are aligned and extend perpendicularly with respect to the axis of symmetry. Each first bore 132 defines an inside surface 166. The tip 154 extends outside of a footprint of the shoe body 146 such that adjacent shoes can be connected. The second side 138 of the track shoe 122 forms two seats 156 on the shoe body 146, each seat 156 configured to accommodate the tip 154 of the male lug 1 26. The second side 138 of the track shoe 122 further forms a pair of cutouts 158 spaced equally on either side of the axis of symmetry 152 in a lateral direct with respect to the chain. The pair of cutouts 158 each forms an outside female lug 124 and an inside female lug 128, the outside female lug 124 disposed further from the axis of symmetry 152 than the inside female lug 128. The inside female lug 128 forms a second bore 134, the second bore 134 defining an inside surface 168. The outside female lug 124 forms a third bore 130 through the outside female lug 124, the third bore 130 having a diameter similar to a diameter of the second bore 134 of the inside female lug 128, and the third bore 130 defining an inside surface 164. The third bore 130 and the second bore 134 are aligned and extend perpendicular to the axis of symmetry 152 of the track shoe 122. The outside female lug 124 is a stepped bore that includes a counterbore 160 on a side away from the inside female lug 128. The counterbore 160 forms a bottom surface 162, which defines an annular surface that is concentric with and surrounds the outside female lug 124 to provide a stop surface when inserting the track pin cartridge assembly 200 that forms the pin connection between two track shoes 122. Alternatively, the first bore 132, the second bore 134, and the third bore 130 may differ in diameter. For example, the diameter of the third bore 130 may be larger than the diameter of the first bore 132, and the diameter of the first bore 132 may be larger than the diameter of the second bore 134.

The cutouts 158 are sized to accommodate the male lugs 126 such that the male lugs 126 may be interposed between the inside and outside female lugs 128, 124 of an adjacent track shoe 122. When adjacent track shoes 122 are connected, the supporting bores 130, 132, 134, are axially aligned along their respective centerlines. The supporting bores 130, 132, 134 are substantially similar in diameter. The male lug 126 closer to the outer side 150 of one track shoe 122 along with the inside and outside female lugs 128, 124 closer to the outer side 150 of an adjacent track shoe 122 form the second joint 144. The male lug 126 closer to the inner side 148 of one track shoe 122 along with the inside and outside female lugs 128, 124 closer to the inner side 148 of an adjacent track shoe 122 form the first joint 142. It should be appreciated that the first joint 142 and a second joint 144 may be similar and, further, may represent mirror images of one another. Thus, only the second joint 144 will be described herein. It should be understood that the description of the second joint 144 is applicable to the first joint 142 as well.

The second joint 144 is configured to allow the male lug 126 to rotate with respect to the inside and outside female lugs 128, 124. With respect to the second joint 144, the track pin cartridge assembly 200 is configured to enter the outside female lug 124 of a track shoe 122 via the third bore 130, pass through the male lug 126 of an adjacent track shoe 122 via the first bore 132, and enter the inside female lug 128 via the second bore 134 to mechanically couple two adjacent track shoes 122. The outer diameter of the track pin cartridge assembly 200 is configured to be slightly smaller than the diameter of the supporting bores 130, 132, 134. In operation, the track pin cartridge assembly 200 may be installed and removed with only hand tools and is free to rotate within the supporting bores 130, 132,134. The track pin cartridge assembly 200 may be restrained from axial movement using a retainer plate 140. In operation, the track pin cartridge assembly 200 is configured to rotatably couple the track shoe 122 with adjacent track shoes 122.

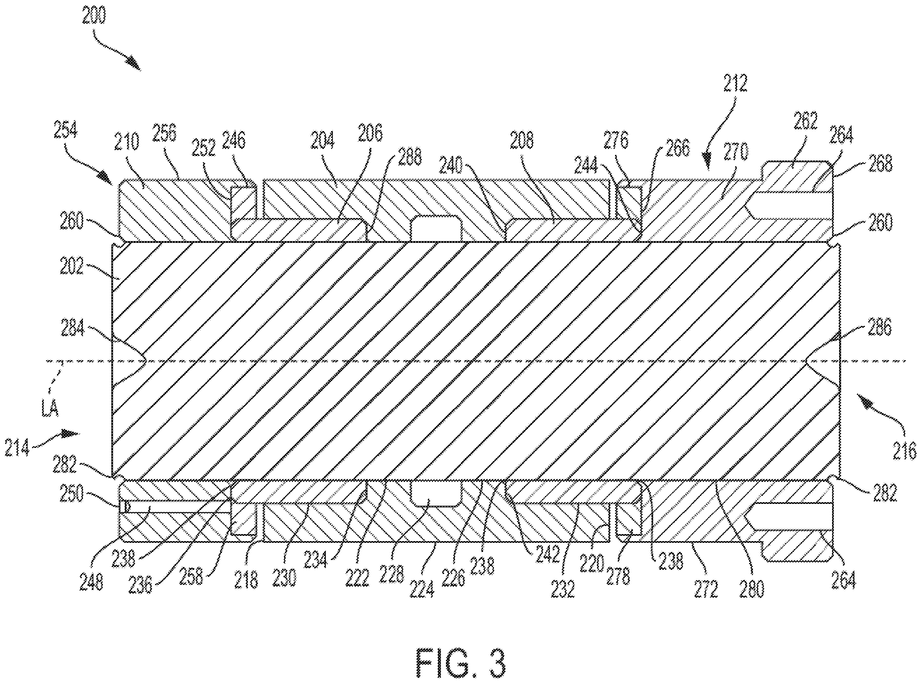

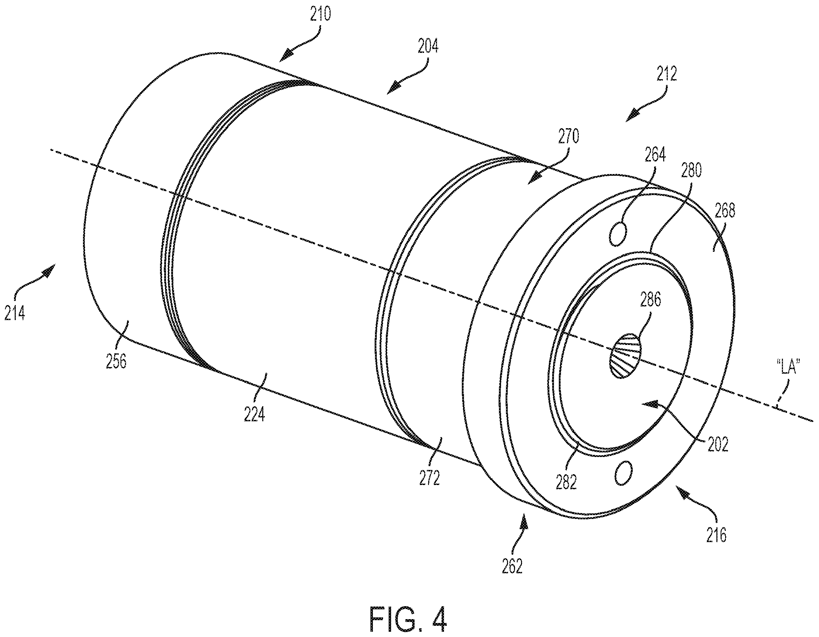

FIG. 3 is a cross section through the center of a track pin cartridge assembly 200 in accordance with the disclosure, and FIG. 4 is an isometric view of the track pin cartridge assembly 200 in accordance with the disclosure. The illustrated track pin cartridge assembly 200 includes a track pin 202, a bushing 204, a first sleeve 206, a second sleeve 208, a first collar 210, and a second collar 212. The track pin 202 defines a longitudinal axis "LA", and the track pin 202 includes a first end 214, a second end 216, and an outer surface 280. The track pin 202 forms a ring groove 282 near at least one of the first end 214 and the second end 216 adjacent the outer surface 280 and extending radially inwards, the ring groove 282 configured to house a retaining ring (not shown). The first end 214 may form a first centering groove 284 that is conical in shape and is concentric with the track pin 202. The first centering groove 284 forms a circular cross section adjacent the first end 214 and extends towards the second end 216. The second end 216 may form a second centering groove 286 that is conical in shape and is concentric with the track pin 202. The second centering groove 286 forms a circular cross section adjacent the second end 216 and extends towards the first end 214.

The bushing 204 is rotatably positioned about the track pin 202 such that the bushing 204 is rotatable with respect to the track pin 202 about the longitudinal axis "LA." The bushing 204 includes a first end face 218, a second end face 220, an outer surface 224, and an inner surface 222 defining a passage in the form of a cylindrical bore 226 therethrough that is concentrically disposed about the longitudinal axis "LA" and is configured to receive the track pin 202. The outer surface 224 of the bushing 204 is substantially cylindrical. The bushing 204 forms a lubrication reservoir 228 adjacent the inner surface 222 and extending towards the outer surface 224 of the bushing 204. The lubrication reservoir 228 is substantially aligned between the first end face 218 and the second end face 220. The lubrication reservoir 228 may be filled, for example, with oil. The bushing 204 forms a first counterbore 230 adjacent the inner surface 222 and adjacent the first end face 218, and extending towards the outer surface 224 of the bushing 204 and the lubrication reservoir 228. The first counterbore 230 defines an annular surface 288 perpendicular to the inner surface 222. The bushing 204 forms a second counterbore 232 adjacent the inner surface 222 and adjacent the second end face 220, and extending towards the outer surface 224 of the bushing 204 and the lubrication reservoir 228. The second counterbore 232 defines an annular surface 240 perpendicular to the inner surface 222. In other embodiments, the bushing 204 can have a different shape and configuration. The outer surface 224 of the bushing 204 is configured for a clearance fit with the outer diameter of the track pin cartridge assembly 200.

The first sleeve 206 is rotatably positioned about the track pin 202 such that the first sleeve 206 is rotatable with respect to the track pin 202 about the longitudinal axis "LA." The first sleeve 206 is positioned within the first counterbore 230 of the bushing 204 such that the first sleeve 206 is interposed between the track pin 202 and the bushing 204. The first sleeve 206 is free to rotate with respect to both the track pin 202 and the bushing 204. In operation, the first sleeve 206 may be completely surrounded by lubrication. The lubrication from the lubrication reservoir 228 extends throughout the interface between the first sleeve 206 and the bushing 204, the first sleeve 206 and the track pin 202, and the first sleeve 206 and a first collar 210. The first sleeve 206 includes a first end 234 and a second end 236. Both the first end 234 and the second end 236 include a lubrication groove 238 at the interface between the track pin 202 and the first sleeve 206. The first end 234 is disposed adjacent the annular surface 288 of the first counterbore 230. The first sleeve 206 extends from the first end 234 to beyond the first end face 218 of the bushing 204.

The second sleeve 208 is rotatably positioned about the track pin 202 such that the second sleeve 208 is rotatable with respect to the track pin 202 about the longitudinal axis "LA." The second sleeve 208 is positioned within the second counterbore 232 of the bushing 204 such that the second sleeve 208 is interposed between the track pin 202 and the bushing 204. The second sleeve 208 is free to rotate with respect to both the track pin 202 and the bushing 204. In operation, the second sleeve 208 may be completely surrounded by lubrication. The second sleeve 208 includes a first end 242 and a second end 244. Both the first end 242 and the second end 244 include a lubrication groove 238 at the interface between the track pin 202 and the first sleeve 206. The first end 242 is disposed adjacent the annular surface 240 of the second counterbore 232. The second sleeve 208 extends from the first end 242 to beyond the second end face 220 of the bushing 204.

The first collar 210 is disposed about the track pin 202 adjacent the first sleeve 206. The first collar 210 may be press fitted on to the track pin 202. The first collar 210 is configured to rotate about the longitudinal axis "LA" with the track pin 202. The first collar 210 includes a first end 252, a second end 254, and an outer surface 256. The outer surface 256 of the first collar 210 is substantially adjacent the outer surface 224 of the bushing 204. The first end 252 is disposed adjacent the first sleeve 206. The first end 252 of the first collar 210 forms a first lip 246 adjacent the outer surface 256 of the first collar 210. The first lip 246 extends from the first end 252 towards the bushing 204. The first lip 246 is configured to be in spaced relation with the bushing 204 such that the first lip 246 ends prior to contacting the first end face 218 of the bushing 204. A first seal 258 is interposed between the first lip 246 and the first sleeve 206. The first seal 258 is configured to sealingly engage the first collar 210 and the first sleeve 206. The second end 254 of the first collar 210 is positioned near the first end 214 of the track pin 202. The second end 254 of the first collar 210 may form a ring groove 260, the ring groove 260 configured to at least partially house a retaining ring (not shown). The first collar 210 forms a passage 248, the passage 248 extending from adjacent the first end 252 to adjacent the second end 254. The passage 248 is configured to serve as a lubrication fill port. A ball 250 is disposed within the passage 248. The ball 250 is configured to plug the passage 248.

The second collar 212 is disposed about the track pin 202 adjacent the second sleeve 208. The second collar 212 may be press fit on to or around a portion of the track pin 202. The second collar 212 is configured to rotate about the longitudinal axis "LA" with the track pin 202. The second collar 212 includes a collar body 270, a collar flange 262, a first end 266, and a second end 268. The collar body 270 includes an outer surface 272. The outer surface 272 of the collar body 270 is positioned substantially adjacent to the outer surface 224 of the bushing 204. The collar flange 262 extends from the outer surface 280 of the track pin 202 radially outwards past the outer surface 272 of the collar body 270. The second collar 212 forms two diametrically opposed collar bores 264, which are positioned adjacent the second end 268 and extend through the collar flange 262 and into the collar body 270. The first end 266 is disposed adjacent the second sleeve 208. The first end 266 of the second collar 212 forms a second lip 276 adjacent the outer surface 272 of the collar body 270. The second lip 276 extends from the first end 266 towards the bushing 204. The second lip 276 is configured to be in spaced relation with the bushing 204 such that the second lip 276 ends prior to contacting the second end face 220 of the bushing 204. A second seal 278 is interposed between the second lip 276 and the second sleeve 208. The second seal 278 is configured to sealingly engage the second collar 212 and the second sleeve 208. The second end 268 of the second collar 212 is positioned near the second end 216 of the track pin 202. The second end 268 of the second collar 212 may form a ring groove 260 that at least partially houses a retaining ring (not shown).

In operation, the outer surface 224 of the bushing 204 is in contact with the inside surface 166 of the male lug 126 of one track shoe 122. The first collar 210 contacts the inside surface 168 of the inside female lug 128 of an adjacent track shoe 122, and the second collar 212 contacts the inside surface 164 of the outside female lug 124 of an adjacent track shoe 122. The bushing 204 is configured to rotate with respect to the inside surface 166 of the male lug 126, the inside surface 168 of the inside female lug 128, and the inside surface 164 of the outside female lug 124. A dry frictional contact between the outer surface 224 of the bushing 204 and the inside surface 166 of the male lug 126 is greater than a wet friction of the lubricated contact between the inner surface 222 of the bushing 204 and the outer surface 280 of the track pin 202, such that rotation of the male lug 126 with respect to the inside and outside female lugs 128, 124 causes a corresponding rotation of the bushing 204 with respect to the track pin 202.

The collar flange 262 is configured to be larger in diameter than the diameters of the supporting bores 130, 132, 134, but smaller in diameter than the diameter of the counterbore 160 of the outside female lug 124. In operation, the track pin cartridge assembly 200 is configured to be housed in the supporting bores 130, 132, 134, but the bottom surface 162 of the counterbore 160 abuts against the collar flange 262 to restrain the track pin cartridge assembly 200 from further axial movement towards the axis of symmetry 152. The retainer plate 140 is configured to restrain axial movement of the track pin cartridge assembly 200 away from the axis of symmetry 152. Other methods to axially restrict the track pin cartridge assembly 200 may be used. The collar bores 264 are configured to assist in handling and aid in removing the track pin cartridge assembly 200 from the supporting bores using lifting eyes or other screw thread tools. The collar flange 262 may form other features to assist in handling and removing the track pin cartridge assembly 200. The first and second centering grooves 284, 286 may be used as centering locators during the assembly of the track pin cartridge assembly 200.

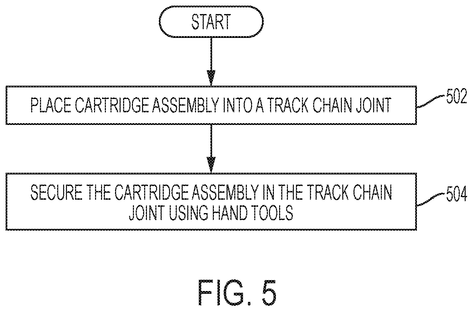

A flowchart for a method for installing a cartridge assembly into a track joint in accordance with the disclosure is shown in FIG. 5. At step 502, a cartridge assembly is placed into a track chain joint. An outer diameter of the cartridge assembly is less than a diameter of supporting bores such that the cartridge assembly is rotatable with respect to inside surfaces of the supporting bores. At step 504, the cartridge assembly is secured in the track chain joint using hand tools. For example, a retainer plate may be attached to the cartridge assembly to secure the cartridge assembly in the track chain joint. The retainer plate may be attached to the cartridge assembly with screws or bolts using a hand tool such as an electric drill, a screwdriver, a wrench, or pliers.

### Industrial Applicability

The industrial applicability of the embodiments of a track pin cartridge assembly described herein will be readily appreciated from the foregoing discussion. At least one embodiment of the disclosed track pin cartridge assembly can be used in an undercarriage of a hydraulic mining shovel machine.

In general, a track pin cartridge assembly has been disclosed that can increase the useful life of a track chain system for a mining vehicle by reducing wear on a track joint through the use of a lubricated cartridge, or a track pin cartridge assembly. Further, a track pin cartridge assembly has been disclosed that can allow for ease of replacement and service. A track pin cartridge assembly having a slightly smaller diameter than the supporting bores can allow for slip fit installation as opposed to press fit installation. As a result, replacement and servicing of the track pin cartridge assembly may be accomplished with hand tools.

In track joint applications, the loading and motions are generally unidirectional, so wear and impact issues resulting from a track pin cartridge assembly with a smaller diameter are less than applications where the loading on the joints may come from any direction. Additionally, a male lug 126 of a track shoe 122 is rotatably coupled with an inside and outside female lug 128, 124 of an adjacent track shoe 122 via a pair of track pin cartridge assemblies as shown in FIG. 2. In operation, shear stress on a track joint cartridge that is not lubricated puts an axial load on the cartridge, causing the cartridge to experience an axial sliding motion within the supporting bores 130, 132, 134 as the male lug 126 rotates with respect to the inside and outside female lugs 128, 124. In operation, a lubricated cartridge, as presently disclosed, internalizes the shear stress on the track joint cartridge via the first and second sleeves that act as thrust bearings. Consequently, the lubricated cartridge experiences a rolling motion within the supporting bores 130, 132, 134 as the male lug 126 rotates with respect to the inside and outside female lugs 128, 124. Thus, the lubricated cartridge is subject to less axial motion and requires less axial motion restraining means than a track joint cartridge that is not lubricated.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention.

## Claims

1. A cartridge assembly (200) for creating a pin joint between adjacent track shoes (122) in a track chain, the pin joint extending through supporting bores (130, 132, 134) formed in the track shoes (122), the cartridge assembly (200) comprising:
a bushing (204) having a first end face (218), a second end face (220), an outer surface (224), and an inner surface (222), the inner surface (222) defining a bushing passage shaped as a cylindrical bore (226),
wherein the bushing (204) forms a lubrication reservoir (228) adjacent the inner surface (222) of the bushing (204) and extending towards the outer surface (224) of the bushing (204), the lubrication reservoir (228) substantially aligned between the first end face (218) and the second end face (220), and
wherein the outer surface (224) of the bushing (204) corresponds with an outer diameter of the cartridge assembly (200);
a track pin (202) having a longitudinal axis, an outer surface (280), a first end (214), and a second end (216), the track pin (202) disposed within the cylindrical bore (226) of the bushing (204) such that both the first end (214) and the second end (216) of the track pin (202) extend past the bushing (204),
wherein the bushing (204) is rotatable with respect to the track pin (202), and
wherein the outer surface (280) of the track pin (202) is in fluid communication with the lubrication reservoir (228);
a first sleeve (206) disposed about the track pin (202) and adjacent to the first end face (218) of the bushing (204);
a second sleeve (208) disposed about the track pin (202) and adjacent to the second end face (220) of the bushing (204);
a first collar (210) having an outer surface (256), a first end (252), and a second end (254), the first collar (210) disposed about the track pin (202) and the first end (252) of the first collar (210) disposed adjacent the first sleeve (206); and
a second collar (212) having an outer surface (272) and a first end (266), the second collar (212) disposed about the track pin (202) and the first end (266) of the second collar (212) disposed adjacent the second sleeve (208);
**characterised in that**, the outer diameter of the cartridge assembly (200) is less than a diameter of supporting bores (130, 132, 134) such that the cartridge assembly (200), comprising the track pin (202), the bushing (204), the first sleeve (206), the second sleeve (208), the first collar (210) and the second collar (212), is rotatable with respect to inside surfaces (164, 166, 168) of the supporting bores (130, 132, 134).

2. The cartridge assembly (200) of claim 1, wherein the first end (252) of the first collar (210) forms a first lip (246) adjacent the outer surface (256) of the first collar (210) extending towards the track pin (202) and adjacent the first end (252) of the first collar (210) extending towards the bushing (204),
wherein the first end (266) of the second collar (212) forms a second lip (276) adjacent the outer surface (272) of the second collar (212) extending towards the track pin (202) and adjacent the first end (266) of the second collar (212) extending towards the bushing (204), and
wherein the cartridge assembly (200) further comprises a first seal (258) and a second seal (278), the first seal (258) interposed between the first lip (246) and the first sleeve (206), the second seal (278) interposed between the second lip (276) and the second sleeve (208).

3. The cartridge assembly (200) of claim 1, wherein the first collar (210) forms a passage (248) extending from adjacent the first end (252) of the first collar (210) to adjacent the second end (254) of the first collar (210).

4. The cartridge assembly (200) of claim 1, wherein the outer surface (224) of the bushing (204) is adjacent the outer surface (256) of the first collar (210) and the outer surface (272) of the second collar (212).

5. A track chain joint assembly comprising:
a male lug (126) forming a first bore (132);
an inside female lug (128) forming a second bore (134);
an outside female lug (124) forming a third bore (130), wherein the male lug (126) is interposed between the inside female lug (128) and the outside female lug (124);
a track shoe (122) forming the inside female lug (128) and the outside female lug (124);
an adjacent track shoe (122) forming the male lug (126); and
a cartridge assembly (200) according to claim 1 having an outer diameter and having a longitudinal axis,
wherein the cartridge assembly (200) is disposed within the first bore (132), the second bore (134), and the third bore (130),
wherein the cartridge assembly (200) is configured to rotate with respect to the longitudinal axis within the first bore (132), the second bore (132), and the third bore (130), and

6. The track chain joint assembly of claim 5, wherein the cartridge assembly (200) includes a bushing (204) and a track pin (202), the bushing (204) having a first end face (218), a second end face (220), an outer surface (224), and an inner surface (222), the inner surface (222) defining a bushing passage shaped as a cylindrical bore (226), and the track pin (202) disposed within the cylindrical bore (226) of the bushing (204) such that both a first end (214) and a second end (216) of the track pin (202) extend beyond the bushing (202),
wherein the bushing (204) forms a lubrication reservoir (228) adjacent the inner surface (222) of the bushing (204) and extending towards the outer surface (224) of the bushing (204), the lubrication reservoir (228) substantially aligned between the first end face (218) and the second end face (220),
wherein the outer surface (224) of the bushing corresponds with an outer diameter of the cartridge assembly (200),
wherein the bushing (204) is rotatable with respect to the track pin (202), and
wherein the outer surface (280) of the track pin (202) is in fluid communication with the lubrication reservoir (228).

7. The cartridge assembly (200) of claim 5, wherein the track pin (202) forms a ring groove (282) near each of the first end (214) of the track pin (202) and the second end (216) of the track pin (202) and adjacent to an outer surface (280) of the track pin (202) extending radially inwards.

8. The cartridge assembly (200) of claim 5, wherein the bushing (204) forms a first counterbore (230) extending from adjacent the first end face (218) towards the lubrication reservoir (228) and a second counterbore (232) extending from adjacent the second end face (220) towards the lubrication reservoir (228).

9. A method for installing a cartridge assembly (200) for a track chain comprising:
placing the cartridge assembly (200) into a track chain joint (144); and
securing the cartridge assembly (200) in the track chain joint (144) using hand tools, wherein an outer diameter of the cartridge assembly (200) is less than a diameter of supporting bores (130, 132, 134) such that the cartridge assembly (200), comprising the track pin (202), the bushing (204), the first sleeve (206), the second sleeve (208), the first collar (210) and the second collar (212), is rotatable with respect to inside surfaces (164, 166, 168) of the supporting bores (130, 132, 134).

10. The method of claim 9, wherein the bushing (204) having a first end face (218), a second end face (220), an outer surface (224), and an inner surface (222), the inner surface (222) defining a bushing passage shaped as a cylindrical bore (226), and the track pin (202) disposed within the cylindrical bore (226) of the bushing (204) such that both a first end (214) and a second end (216) of the track pin (202) extend beyond the bushing (204),
wherein the bushing (204) forms a lubrication reservoir (228) adjacent the inner surface (222) of the bushing (204) and extending towards the outer surface (224) of the bushing (204), the lubrication reservoir (228) substantially aligned between the first end face (218) and the second end face (220),
wherein the outer surface (224) of the bushing (204) corresponds with an outer diameter of the cartridge assembly (200),
wherein the bushing (204) is rotatable with respect to the track pin (202), and
wherein the outer surface (224) of the track pin (202) is in fluid communication with the lubrication reservoir (228).

## Patentansprüche

1. Kartuschenanordnung (200) zum Erzeugen eines Stiftgelenks zwischen angrenzenden Raupenschuhen (122) in einer Raupenkette, wobei sich das Stiftgelenk durch Stützbohrungen (130, 132, 134) erstreckt, die in den Raupenschuhen (122) ausgebildet sind, wobei die Kartuschenanordnung (200) Folgendes umfasst:
eine Buchse (204) mit einer ersten Endfläche (218), einer zweiten Endfläche (220), einer Außenfläche (224) und einer Innenfläche (222), wobei die Innenfläche (222) einen Buchsendurchgang in Form einer zylindrischen Bohrung (226) definiert,
wobei die Buchse (204) einen Schmiermittelbehälter (228) bildet, der an die Innenfläche (222) der Buchse (204) angrenzt und sich zur Außenfläche (224) der Buchse (204) erstreckt, wobei der Schmiermittelbehälter (228) im Wesentlichen zwischen der ersten Endfläche (218) und der zweiten Endfläche (220) ausgerichtet ist, und
wobei die Außenfläche (224) der Buchse (204) einem Außendurchmesser der Kartuschenanordnung (200) entspricht;
einen Raupenstift (202) mit einer Längsachse, einer Außenfläche (280), einem ersten Ende (214) und einem zweiten Ende (216), wobei der Raupenstift (202) innerhalb der zylindrischen Bohrung (226) der Buchse (204) so angeordnet ist, dass sich sowohl das erste Ende (214) als auch das zweite Ende (216) des Raupenstifts (202) über die Buchse (204) hinaus erstrecken,
wobei die Buchse (204) in Bezug auf den Raupenstift (202) drehbar ist, und
wobei die Außenfläche (280) des Raupenstifts (202) in Fluidverbindung mit dem Schmiermittelbehälter (228) steht;
eine erste Hülse (206), die um den Raupenstift (202) herum und angrenzend an die erste Endfläche (218) der Buchse (204) angeordnet ist;
eine zweite Hülse (208), die um den Raupenstift (202) herum und angrenzend an die zweite Endfläche (220) der Buchse (204) angeordnet ist;
einen ersten Kragen (210) mit einer Außenfläche (256), einem ersten Ende (252) und einem zweiten Ende (254), wobei der erste Kragen (210) um den Raupenstift (202) herum angeordnet ist und das erste Ende (252) des ersten Kragens (210) angrenzend an die erste Hülse (206) angeordnet ist; und
einen zweiten Kragen (212) mit einer Außenfläche (272) und einem ersten Ende (266), wobei der zweite Kragen (212) um den Raupenstift (202) herum angeordnet ist und das erste Ende (266) des zweiten Kragens (212) angrenzend an die zweite Hülse (208) angeordnet ist;
**dadurch gekennzeichnet, dass** der Außendurchmesser der Kartuschenanordnung (200) kleiner als ein Durchmesser von Stützbohrungen (130, 132, 134) ist, sodass die Kartuschenanordnung (200), die den Raupenstift (202), die Buchse (204), die erste Hülse (206), die zweite Hülse (208), den ersten Kragen (210) und den zweiten Kragen (212) umfasst, in Bezug auf die Innenflächen (164, 166, 168) der Stützbohrungen (130, 132, 134) drehbar ist.

2. Kartuschenanordnung (200) nach Anspruch 1, wobei das erste Ende (252) des ersten Kragens (210) eine erste Lippe (246) angrenzend an die Außenfläche (256) des ersten Kragens (210) bildet, die sich in Richtung des Raupenstifts (202) und angrenzend an das erste Ende (252) des ersten Kragens (210) erstreckt, der sich in Richtung der Buchse (204) erstreckt,
wobei das erste Ende (266) des zweiten Kragens (212) eine zweite Lippe (276) angrenzend an die Außenfläche (272) des zweiten Kragens (212) bildet, die sich in Richtung des Raupenstifts (202) und angrenzend an das erste Ende (266) des zweiten Kragens (212) erstreckt, der sich in Richtung der Buchse (204) erstreckt, und
wobei die Kartuschenanordnung (200) ferner eine erste Dichtung (258) und eine zweite Dichtung (278) umfasst, wobei die erste Dichtung (258) zwischen der ersten Lippe (246) und der ersten Hülse (206) angeordnet ist und die zweite Dichtung (278) zwischen der zweiten Lippe (276) und der zweiten Hülse (208) angeordnet ist.

3. Kartuschenanordnung (200) nach Anspruch 1, wobei der erste Kragen (210) einen Durchgang (248) bildet, der sich von dem ersten Ende (252) des ersten Kragens (210) angrenzend an das zweite Ende (254) des ersten Kragens (210) erstreckt.

4. Kartuschenanordnung (200) nach Anspruch 1, wobei die Außenfläche (224) der Buchse (204) an die Außenfläche (256) des ersten Kragens (210) und die Außenfläche (272) des zweiten Kragens (212) angrenzt.

5. Raupenkettengelenkanordnung, umfassend:
eine Stecklasche (126), die eine erste Bohrung (132) bildet;
eine innere Buchsenlasche (128), die eine zweite Bohrung (134) bildet;
eine äußere Buchsenlasche (124), die eine dritte Bohrung (130) bildet, wobei die Stecklasche (126) zwischen der inneren Buchsenlasche (128) und der äußeren Buchsenlasche (124) angeordnet ist;
einen Raupenschuh (122), der die innere Buchsenlasche (128) und die äußere Buchsenlasche (124) bildet;
einen angrenzenden Raupenschuh (122), der die Stecklasche (126) bildet;
und eine Kartuschenanordnung (200) nach Anspruch 1, die einen Außendurchmesser und eine Längsachse aufweist,
wobei die Kartuschenanordnung (200) innerhalb der ersten Bohrung (132), der zweiten Bohrung (134) und der dritten Bohrung (130) angeordnet ist,
wobei die Kartuschenanordnung (200) konfiguriert ist, sich in Bezug auf die Längsachse innerhalb der ersten Bohrung (132), der zweiten Bohrung (132) und der dritten Bohrung (130) zu drehen, und

6. Raupenkettengelenkanordnung nach Anspruch 5, wobei die Kartuschenanordnung (200) eine Buchse (204) und einen Raupenstift (202) einschließt, wobei die Buchse (204) eine erste Endfläche (218), eine zweite Endfläche (220), eine Außenfläche (224) und eine Innenfläche (222) aufweist, wobei die Innenfläche (222) einen Buchsendurchgang definiert, der als zylindrische Bohrung (226) ausgebildet ist, und der Raupenstift (202) innerhalb der zylindrischen Bohrung (226) der Buchse (204) so angeordnet ist, dass sich sowohl ein erstes Ende (214) als auch ein zweites Ende (216) des Raupenstifts (202) über die Buchse (202) hinaus erstrecken,
wobei die Buchse (204) einen Schmiermittelbehälter (228) bildet, der an die Innenfläche (222) der Buchse (204) angrenzt und sich zur Außenfläche (224) der Buchse (204) erstreckt, wobei der Schmiermittelbehälter (228) im Wesentlichen zwischen der ersten Endfläche (218) und der zweiten Endfläche (220) ausgerichtet ist,
wobei die Außenfläche (224) der Buchse einem Außendurchmesser der Kartuschenanordnung (200) entspricht,
wobei die Buchse (204) in Bezug auf den Raupenstift (202) drehbar ist, und
wobei die Außenfläche (280) des Raupenstifts (202) in Fluidverbindung mit dem Schmiermittelbehälter (228) steht.

7. Kartuschenanordnung (200) nach Anspruch 5, wobei der Raupenstift (202) eine Ringnut (282) nahe jedem des ersten Endes (214) des Raupenstifts (202) und des zweiten Endes (216) des Raupenstifts (202) und angrenzend an eine Außenfläche (280) des Raupenstifts (202) bildet, die sich radial nach innen erstreckt.

8. Kartuschenanordnung (200) nach Anspruch 5, wobei die Buchse (204) eine erste Senkbohrung (230), die sich von angrenzend an die erste Endfläche (218) zu dem Schmiermittelbehälter (228) erstreckt, und eine zweite Senkbohrung (232), die sich von angrenzend an die zweite Endfläche (220) zu dem Schmiermittelbehälter (228) erstreckt, bildet.

9. Verfahren zum Installieren einer Kartuschenanordnung (200) für eine Raupenkette, umfassend:
Platzieren der Kartuschenanordnung (200) in einem Raupenkettengelenk (144); und
Sichern der Kartuschenanordnung (200) in dem Raupenkettengelenk (144) mit Hilfe von Handwerkzeugen, wobei ein Außendurchmesser der Kartuschenanordnung (200) kleiner als ein Durchmesser von Stützbohrungen (130, 132, 134) ist, sodass die Kartuschenanordnung (200), die den Raupenstift (202), die Buchse (204), die erste Hülse (206), die zweite Hülse (208), den ersten Kragen (210) und den zweiten Kragen (212) umfasst, in Bezug auf die Innenflächen (164, 166, 168) der Stützbohrungen (130, 132, 134) drehbar ist.

10. Verfahren nach Anspruch 9, wobei die Buchse (204) eine erste Endfläche (218), eine zweite Endfläche (220), eine Außenfläche (224) und eine Innenfläche (222) aufweist, wobei die Innenfläche (222) einen Buchsendurchgang definiert, der als zylindrische Bohrung (226) ausgebildet ist, und der Raupenstift (202) innerhalb der zylindrischen Bohrung (226) der Buchse (204) so angeordnet ist, dass sich sowohl ein erstes Ende (214) als auch ein zweites Ende (216) des Raupenstifts (202) über die Buchse (204) hinaus erstrecken,
wobei die Buchse (204) einen Schmiermittelbehälter (228) bildet, der an die Innenfläche (222) der Buchse (204) angrenzt und sich zur Außenfläche (224) der Buchse (204) erstreckt, wobei der Schmiermittelbehälter (228) im Wesentlichen zwischen der ersten Endfläche (218) und der zweiten Endfläche (220) ausgerichtet ist,
wobei die Außenfläche (224) der Buchse (204) einem Außendurchmesser der Kartuschenanordnung (200) entspricht,
wobei die Buchse (204) in Bezug auf den Raupenstift (202) drehbar ist, und
wobei die Außenfläche (224) des Raupenstifts (202) in Fluidverbindung mit dem Schmiermittelbehälter (228) steht.

## Revendications

1. Ensemble de cartouche (200) pour créer une articulation d'axe entre des patins de chenille adjacents (122) dans une chenille, l'articulation d'axe s'étendant à travers des alésages de support (130, 132, 134) formés dans les patins de chenille (122), l'ensemble de cartouche (200) comprenant :
une bague (204) ayant une première face d'extrémité (218), une deuxième face d'extrémité (220), une surface externe (224), et une surface interne (222), la surface interne (222) définissant un passage de bague formé comme un alésage cylindrique (226),
dans lequel la bague (204) forme un réservoir de lubrification (228) adjacent à la surface interne (222) de la bague (204) et s'étendant vers la surface externe (224) de la bague (204), le réservoir de lubrification (228) sensiblement aligné entre la première face d'extrémité (218) et la deuxième face d'extrémité (220), et
dans lequel la surface externe (224) de la bague (204) correspond à un diamètre externe de l'ensemble de cartouche (200) ;
un axe d'articulation de chenille (202) ayant un axe longitudinal, une surface externe (280), une première extrémité (214), et une deuxième extrémité (216), l'axe d'articulation de chenille (202) disposé à l'intérieur de l'alésage cylindrique (226) de la bague (204) de telle sorte que la première extrémité (214) et la deuxième extrémité (216) de l'axe d'articulation de chenille (202) s'étendent au-delà de la bague (204),
dans lequel la bague (204) peut tourner par rapport à l'axe d'articulation de chenille (202), et
dans lequel la surface externe (280) de l'axe d'articulation de chenille (202) est en communication fluidique avec le réservoir de lubrification (228) ;
un premier manchon (206) disposé autour de l'axe d'articulation de chenille (202) et adjacent à la première face d'extrémité (218) de la bague (204) ;
un deuxième manchon (208) disposé autour de l'axe d'articulation de chenille (202) et adjacent à la deuxième face d'extrémité (220) de la bague (204) ;
un premier collier (210) ayant une surface externe (256), une première extrémité (252), et une deuxième extrémité (254), le premier collier (210) disposé autour de l'axe d'articulation de chenille (202) et la première extrémité (252) du premier collier (210) disposée à côté du premier manchon (206) ; et
un deuxième collier (212) ayant une surface externe (272) et une première extrémité (266), le deuxième collier (212) disposé autour de l'axe d'articulation de chenille (202) et la première extrémité (266) du deuxième collier (212) disposée à côté du deuxième manchon (208) ;
**caractérisé en ce que,** le diamètre externe de l'ensemble de cartouche (200) est inférieur à un diamètre d'alésages de support (130, 132, 134) de telle sorte que l'ensemble de cartouche (200), comprenant l'axe d'articulation de chenille (202), la bague (204), le premier manchon (206), le deuxième manchon (208), le premier collier (210) et le deuxième collier (212), puisse tourner par rapport aux surfaces intérieures (164, 166, 168) des alésages de support (130, 132, 134).

2. Ensemble de cartouche (200) selon la revendication 1, dans lequel la première extrémité (252) du premier collier (210) forme une première lèvre (246) adjacente à la surface externe (256) du premier collier (210) s'étendant vers l'axe d'articulation de chenille (202) et adjacente à la première extrémité (252) du premier collier (210) s'étendant vers la bague (204),
dans lequel la première extrémité (266) du deuxième collier (212) forme une deuxième lèvre (276) adjacente à la surface externe (272) du deuxième collier (212) s'étendant vers l'axe d'articulation de chenille (202) et adjacente à la première extrémité (266) du deuxième collier (212) s'étendant vers la bague (204), et
dans lequel l'ensemble de cartouche (200) comprend en outre un premier joint (258) et un deuxième joint (278), le premier joint (258) interposé entre la première lèvre (246) et le premier manchon (206), le deuxième joint (278) interposé entre la deuxième lèvre (276) et le deuxième manchon (208).

3. Ensemble de cartouche (200) selon la revendication 1, dans lequel le premier collier (210) forme un passage (248) s'étendant du côté de la première extrémité (252) du premier collier (210) au côté de la deuxième extrémité (254) du premier collier (210).

4. Ensemble de cartouche (200) selon la revendication 1, dans lequel la surface externe (224) de la bague (204) est adjacente à la surface externe (256) du premier collier (210) et à la surface externe (272) du deuxième collier (212).

5. Ensemble d'articulation de chenille comprenant :
une oreille mâle (126) formant un premier alésage (132) ; une
oreille femelle intérieure (128) formant un deuxième alésage (134) ;
une oreille femelle extérieure (124) formant un troisième alésage (130), dans lequel l'oreille mâle (126) est interposée entre l'oreille femelle intérieure (128) et l'oreille femelle extérieure (124) ;
un patin de chenille (122) formant l'oreille femelle intérieure (128) et l'oreille femelle extérieure (124) ;
un patin de chenille adjacent (122) formant l'oreille mâle (126) ;
et un ensemble de cartouche (200) selon la revendication 1 ayant un diamètre externe et ayant un axe longitudinal,
dans lequel l'ensemble de cartouche (200) est disposé à l'intérieur du premier alésage (132), du deuxième alésage (134), et du troisième alésage (130),
dans lequel l'ensemble de cartouche (200) est configuré pour tourner par rapport à l'axe longitudinal à l'intérieur du premier alésage (132), du deuxième alésage (132), et du troisième alésage (130), et

6. Ensemble d'articulation de chenille selon la revendication 5, dans lequel l'ensemble de cartouche (200) inclut une bague (204) et un axe d'articulation de chenille (202), la bague (204) ayant une première face d'extrémité (218), une deuxième face d'extrémité (220), une surface externe (224), et une surface interne (222), la surface interne (222) définissant un passage de bague formé comme un alésage cylindrique (226), et l'axe d'articulation de chenille (202) disposé à l'intérieur de l'alésage cylindrique (226) de la bague (204) de telle sorte qu'une première extrémité (214) et une deuxième extrémité (216) de l'axe d'articulation de chenille (202) s'étendent au-delà de la bague (202),
dans lequel la bague (204) forme un réservoir de lubrification (228) adjacent à la surface interne (222) de la bague (204) et s'étendant vers la surface externe (224) de la bague (204), le réservoir de lubrification (228) sensiblement aligné entre la première face d'extrémité (218) et la deuxième face d'extrémité (220),
dans lequel la surface externe (224) de la bague correspond à un diamètre externe de l'ensemble de cartouche (200),
dans lequel la bague (204) peut tourner par rapport à l'axe d'articulation de chenille (202), et
dans lequel la surface externe (280) de l'axe d'articulation de chenille (202) est en communication fluidique avec le réservoir de lubrification (228).

7. Ensemble de cartouche (200) selon la revendication 5, dans lequel l'axe d'articulation de chenille (202) forme une rainure annulaire (282) près de chacune de la première extrémité (214) de l'axe d'articulation de chenille (202) et de la deuxième extrémité (216) de l'axe d'articulation de chenille (202) et à côté d'une surface externe (280) de l'axe d'articulation de chenille (202) s'étendant radialement vers l'intérieur.

8. Ensemble de cartouche (200) selon la revendication 5, dans lequel la bague (204) forme un premier contre-alésage (230) s'étendant du côté de la première face d'extrémité (218) vers le réservoir de lubrification (228) et un deuxième contre-alésage (232) s'étendant du côté de la deuxième face d'extrémité (220) vers le réservoir de lubrification (228).

9. Procédé d'installation d'un ensemble de cartouche (200) pour une chenille comprenant : le placement de l'ensemble de cartouche (200) dans une articulation de chenille (144) ; et
la fixation de l'ensemble de cartouche (200) dans l'articulation de chenille (144) à l'aide d'outils manuels, dans lequel le diamètre externe de l'ensemble de cartouche (200) est inférieur à un diamètre d'alésages de support (130, 132, 134) de telle sorte que l'ensemble de cartouche (200), comprenant l'axe d'articulation de chenille (202), la bague (204), le premier manchon (206), le deuxième manchon (208), le premier collier (210) et le deuxième collier (212), puisse tourner par rapport aux surfaces intérieures (164, 166, 168) des alésages de support (130, 132, 134).

10. Procédé selon la revendication 9, dans lequel la bague (204) a une première face d'extrémité (218), une deuxième face d'extrémité (220), une surface externe (224), et une surface interne (222), la surface interne (222) définissant un passage de bague formé comme un alésage cylindrique (226), et l'axe d'articulation de chenille (202) disposé à l'intérieur de l'alésage cylindrique (226) de la bague (204) de telle sorte qu'une première extrémité (214) et une deuxième extrémité (216) de l'axe d'articulation de chenille (202) s'étendent au-delà de la bague (204),
dans lequel la bague (204) forme un réservoir de lubrification (228) adjacent à la surface interne (222) de la bague (204) et s'étendant vers la surface externe (224) de la bague (204), le réservoir de lubrification (228) sensiblement aligné entre la première face d'extrémité (218) et la deuxième face d'extrémité (220),
dans lequel la surface externe (224) de la bague (204) correspond à un diamètre externe de l'ensemble de cartouche (200),
dans lequel la bague (204) peut tourner par rapport à l'axe d'articulation de chenille (202), et
dans lequel la surface externe (224) de l'axe d'articulation de chenille (202) est en communication fluidique avec le réservoir de lubrification (228).
